# EUROPEAN PATENT APPLICATION

(11) **EP 3 450 198 A1**
(43) Date of publication of application: **06.03.2019**
(21) Application number: 17001378.3
(22) Date of filing: 11.08.2017
(51) Int. Cl.: B60B 15/26

(54) **A WHEEL WITH MOBILE ARMS**

(71) Applicant: Kersevan, Kazimir, 5293 Volcja Draga (SI); Mihelic, Franc, 1317 Sodrazica (SI)
(72) Inventor: MIHELIC, Franc, 1317 Sodrazica (SI)

(57) **Abstract**

The subject of invention is a wheel with mobile arms, incorporating a body of the wheel/preferably rim, connected to the machine's drive shaft, an external covering fitted to the body of the wheel of certain diameter, the diameter of the covering being larger than the diameter of the wheel's body, and the covering having a preferably shaped running surface on its circumference; close to the body of the wheel being attached several arm carriers, incorporating several links connected into a parallel structure and a telescopic arm with a grabber. The mobile arms extend and retract synchronously to the motion of the wheel. According to the invention, the motion of mobile arms implemented as linkage mechanisms is synchronised mechanically by means of two cam curves, which are located on the cam plate and as the wheel rotates enable a coupled and synchronous operation of mobile arms according to the invention, which are fitted close to the wheel's body. The described solution with a cam curve enables a simple technical implementation of motion of mobile arms according to the invention as the wheel rotates, making the implementation useful for most mobile work machines and other wheeled vehicles.

## Description

### Background of invention

There exists a common problem of driving uphill or over terrains speckled with natural obstacles, such as ditch-shaped depressions, humps, stumps, and other natural obstacles. It is difficult for vehicles with standard wheels to move over such terrains. The inclinations with respect to the horizontal plane, encountered e.g. by off-road vehicles, often exceed 30°.

In addition to issues related with the inclination of the terrain, driving over land covered with wet leaves, mud, fine sand or grass may also present difficulties due to a low angle of friction resulting from a low coefficient of friction on such surfaces, affecting both the velocity and the safety of driving.

### State-of-the-art and technical problem

The construction of the wheel with mobile arms solves the problem of driving safely and with an adequate velocity over extremely rugged and rough land for arbitrary vehicles or machines equipped with standard wheels. Vehicles or machines with said wheels are capable of an extremely efficient motion over flat-and non-slippery surfaces. However, steep gradients and other already mentioned natural obstacles, such as rocks, slippery ground, snow and ice, present insurmountable difficulties to motion.

State-of-the-art solutions for the said problem include special aids and devices to improve the traction of wheels on the terrain, such as chains, steel spiked chains, fixed grabbers, additional wheels to improve the grip of wheels on the surface, enlarged wheel circumference, or special tyres with a deeper profile.

These solutions are effective as long as the inclination of obstacles on the terrain is smaller than 30°. For greater inclinations and/or a reduced coefficient of friction of surface they are neither reliable nor safe. Furthermore, it is difficult for wheeled vehicles and machines equipped for driving on rough terrains to move on terrains with varying surfaces. In case a wheel is fitted with special covering in order to enable motion over rugged terrains, such covering impedes motion, e. g. on asphalt, and the vehicle must slow down. The solutions to said problem in the patent literature are either only partial or are technically complex and too costly. Synchronously moving mobile arms according to the invention are a new, complete and efficient solution for the said problem.
In general, a wheel with mobile arms according to the invention can operate in two different modes. The first mode of operation is motion over a plane or a non-demanding terrain, where the mobile arms are inactive and do not reach beyond the running circumference of the said wheel. In the second mode of operation, the above mentioned mobile arms enable motion over rough terrains by extending or retracting beyond the running circumference of the said wheel in a predetermined sequence of movements. Propping against the terrain, the said arms make it possible for the wheel according to the invention to rotate in the direction of motion of the vehicle, and thereby making it possible for the vehicle to move over rough terrains. The solution according to the invention presents a significant improvement to state-of-the-art. It is a technically simple solution, implemented with two motion control cam curves, which make it possible for the mode of driving to be changed while the wheel rotates, thereby making it possible for vehicles fitted with wheels with mobile arms to move both on level and tough terrain. The synchronisation of motion of mobile arms in two modes of operation according to the invention is generally implemented mechanically, preferably with two cam curves, enabling a continuous and synchronous operation of mobile arms, fitted to the wheels according to the invention. The mobile arms extend and retract synchronously to the motion of individual wheels. The implementation of the wheel with mobile arms according to the invention makes it possible to fit the mobile arms on the wheels of most work machines and other wheeled vehicles.
The basic solution is mostly mechanical and requires a minimal quantity of additional energy from the work machine or vehicle, preferably in the form of hydraulic or pneumatic energy. The solution according to the invention is described in detail below. For reasons of clarity, the details of invention will be presented using the drawings, where the presentation itself is not limiting to the substance of invention in any way.

### Description of technical solution

**Figure 1** Axonometric drawing of wheel with mobile arms according to the invention
**Figure 2** Switching mechanism used for switching between the two cam curves

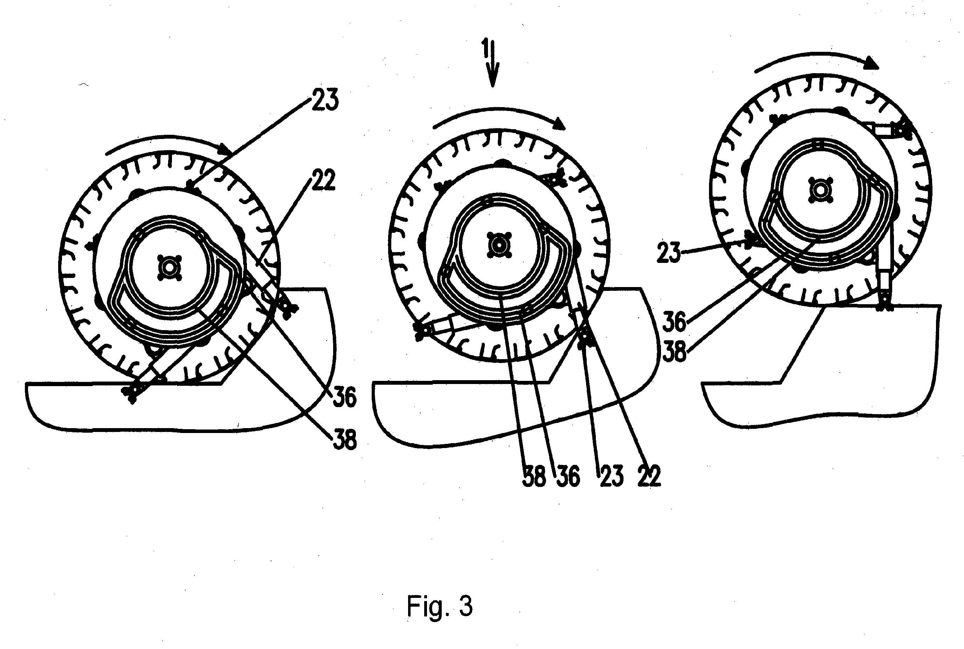

**Figure 3** Schematic drawing of motion

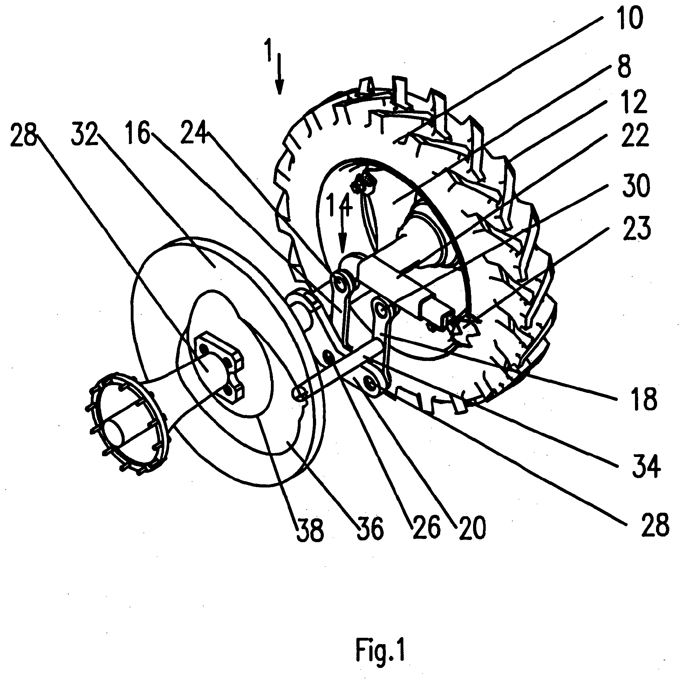

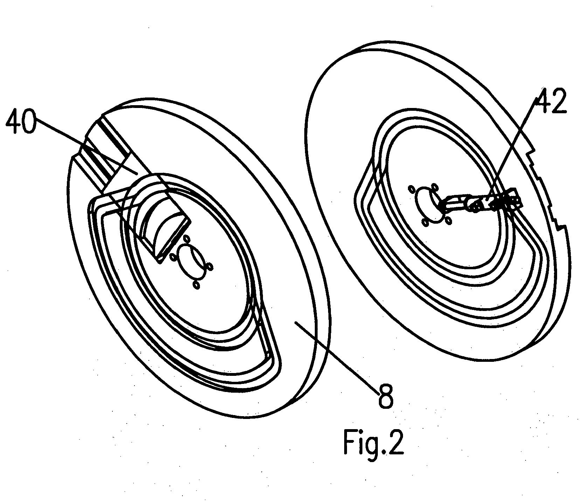

The wheel with mobile arms 1 incorporates the body of the wheel, preferably implemented as the hub 8. There is an external covering fitted on the body of the wheel 8, e.g. a tyre 10, possibly with a shaped running surface 12 on its circumference. The body of the wheel 8 is rigidly connected to the vehicle's drive shaft. Close to the body of the wheel 8, there are one or several arm carriers 14 attached to the previously mentioned machine's drive shaft. The arm carrier 14 incorporates link 16, link 18 and link 20. Furthermore, there is a telescopic arm 22 with a grabber 23 attached to each arm carrier 14 using pins 24 and 30. The above mentioned links are assembled with pins 24, 26, 28 and 30 into a linkage mechanism with a parallel structure, as shown in Figure 1. There is a telescopic arm 22 with a grabber 23 fitted to the said linkage mechanism. The telescopic arm 22 is made of several parts, preferably of tubular shape, which can be inserted into one another.
The arm carrier 14 and the telescopic arm 22 with grabber 23 constitute a mobile arm. The above mentioned links and the connections between them are described below.
Furthermore, there is a cam plate 32 rigidly attached to the vehicle's drive shaft, incorporating preferably the cam curve 30 and the cam curve 36. The cam curve 30 and the cam curve 36 are embedded (cut) in the cam plate and there is a peg 34 moving along them.
The cam curves 30 and 36 are preferably shaped as a groove, preferably of non-rectangular cross-section.
The link 20 is rigidly connected to the drive shaft of the machine (vehicle) 28 on one end, transmitting torque from the machine's drive shaft 28 to the arm carrier 14. The rotation of machine's drive shaft 28 is transmitted over the connected links 16, 18, 20 and onto the connected telescopic arm 22 with grabber 23. The grabber 23 is preferably implemented by having one or several teeth, e. g. of triangular shape, on its top side.
There are three holes embedded in link 20, two on each end of link 20 and one approximately in the centre of link 20. The drive shaft of the machine 28 is inserted into one of the two above mentioned end holes in the link 20; there is a pin 26 inserted into the centre hole in the link 20, connecting the link 20 to link 16, the other hole is drilled in the other end of the link 20 and houses the pin 28 for the connection with link 18. The link 16 is connected to the telescopic arm 22 with grabber 23 by means of pin 24. There is a follower peg 34 fitted to link 18, sliding along the cam curve 30 or curve 36 located on the cam plate 32. The optimal position of peg 34 on link 18, between pin 28 and pin 30, is approximately half the way between the two pins.
At the junction of curves 36 and 38 there is a switching mechanism 40 (see Figure 2) fitted in the cam plate 32, which is able to move between the two end positions and enables the relocation onto and motion of peg 34 along one or the other above mentioned curve according to the operator's commands. The switching mechanism 40 is moved from one position to another by means of a special mechanism. Preferably, the said movement can be implemented with a hydraulic mechanism 42. The minimum number of arm carriers 14 to guarantee a continuous engagement of wheel with the terrain is 4, but there can also be more carriers, wheel diameter permitting.
We are going to illustrate the motion of above mentioned telescopic arms by describing one cycle of motion for an individual telescopic arm implemented as linkage mechanism 22 as the peg 34 slides along the curve 36.

The telescopic arm 22 retracts and extends synchronously to the rotating motion of the wheel with mobile arms 1. Observing the wheel according to the invention in front of an obstacle, the telescopic arm 22 with grabber 23 is retracted and does not reach beyond the running surface 12 on the circumference. As rotation continues, the telescopic arm 22 with grabber 23 begins to extend, reaching the maximum extended position beyond the shaped running surface 12 on the wheel 1 circumference, and the grabber 23 engages with the ground, e. g. the surface of the obstacle. As motion continues, the telescopic arm 22 with grabber 23 extends and reaches beyond the above mentioned circumference of the wheel 1, the grabber 23 remains in contact with the ground and the wheel rotates over the obstacle. As the wheel continues to rotate, the telescopic arm 22 with grabber 23 moves into the retracted position and the grabber 23 loses grip with the ground in the next eighth of the circle.

The described kinematic motion of telescopic arm 22 with grabber 23 or several telescopic arms 22 with grabbers 23 is controlled by the cam curve 36 embedded in the cam plate 32. The cam curve 36 is shaped so as to provide smooth sliding of peg 34 along the curve and so that the angle of slope of motion of peg 34 in the observed point on curve 36 is always smaller than 30 degrees. If the angle is greater than that, the forces necessary to negotiate the slope rise dramatically. The above-mentioned curve 36 ensures proper motion of links: link 16, link 18, link 20 and the motion of telescopic arm 22 with grabber 23. The functional concept of this invention is suitable for low travelling velocities. If the velocity of vehicle's or machine's motion is high, or if there exists no need for assistance due to the tire 12 running surface having an adequate grip, the wheel according to the invention is provided with a possibility of deactivating the mobile arms. For this purpose, there is another curve 38 on the cam plate 23, shaped preferably as a circle. As peg 34 slides along the curve 38, the arm carriers 14 are inactive, and the mobile arms implemented as linkage mechanisms are neither extending nor contracting.

The deactivation of mobile arms is implemented by means of a special mechanism, preferably implemented as a switching mechanism 40. At the junction of curves 36 and 38 there is a switching mechanism 40 fitted on the cam plate 32, which is generally able to move between the two end positions, preferably in one of the two end positions enabling the motion of peg 34 along one curve, and in the other of the two end positions enabling the motion of peg 34 along the other curve according to the operator's commands.
Synchronised motion of mobile arms according to the invention is implemented mechanically using cam curves 36 and 38, which enable a coupled and synchronous operation of mobile arms as constituent parts of the wheel according to the invention in no fewer than two operating modes. The mobile arms extend and retract synchronously to the motion of the wheel with mobile arms according to the invention.

The described control solution with a cam curve enables a simple technical implementation of motion of mobile arms as the wheel rotates, making the implementation useful for most mobile work machines and other wheeled vehicles. The basic solution is predominantly mechanical and requires minimum additional energy from the work machine or vehicle in the form of hydraulic or pneumatic energy.

## Claims

1. A wheel with mobile arms incorporates a body of the wheel/preferably rim, rigidly connected to the machine's drive shaft, an external covering fitted to the body of the wheel of certain diameter, the diameter of the covering being larger than the diameter of the wheel's body, and the covering having a preferably shaped running surface, **characterized in that** there are one or several arm carriers fitted close to the body of the wheel, carrying telescopic arms with grabbers.

2. The wheel with mobile arms according to the patent claim 1 is **characterized in that** telescopic arms are constructed of several parts of preferably tubular shape, which may be inserted into one another.

3. The wheel with mobile arms according to the patent claim 2 **characterized in that** the grabber has at least two or more as teeth formed means on its top side, shaped so as to enable a fixed contact with the ground.

4. The wheel with mobile arms according to the patent claims 1 to 3, **characterized in that** the arm carrier incorporates several links, connected with pins into a parallel structure.

5. The wheel with mobile arms according to the patent claims 1 to 4 **characterized in that** one of the links is rigidly connected at one end to the drive shaft of the machine (vehicle) and transmitting the torque from the machine's drive shaft to the arm carrier.

6. The wheel with mobile arms according to the patent claims 1 to 5 **characterized in that** the kinematic motion of mobile arms, or several mobile arms, are controlled by one or several cam curves embedded in the cam plate.

7. The wheel with mobile arms according to the patent claims 1 to 6 **characterized in that** there is a cam plate affixed to the vehicle's drive shaft.

8. The wheel with mobile arms according to the patent claims 1 to 7 **characterized in that** the cross-section of the cam curve is shaped as a groove, embedded in the cam plate.

9. The wheel with mobile arms according to the patent claims 1 to 8 **characterized in that** there is a peg attached to one of the links connected to form a linkage mechanism, the peg is sliding along the cam curve on the cam plate.

10. The wheel with mobile arms according to the patent claim 9 **characterized in that** the peg has a shape adjusted to the profile of the groove in the cam plate.

11. The wheel with mobile arms according to the patent claims 1 to 10 **characterized in that** the said cam curve is shaped so that the peg slides smoothly along the curve and so that the angle of slope of peg motion in any observed point on the previously mentioned curve is always smaller than 30 degrees.

12. The wheel with mobile arms according to the patent claims 1 to 11 **characterized in that** the mobile arm extends beyond the external covering of the wheel and retracting under the external covering of the wheel as the peg slides along the cam curve.

13. The wheel with mobile arms according to the patent claims 1 to 12 **characterized in that** the location of the peg on the link is approximately half way between the two pins mentioned above.

14. The wheel with mobile arms according to the patent claims 1 to 13 **characterized in that** the mobile arm is inactive, i.e. not extending or retracting beyond the circumference of the external covering of the wheel, as the peg slides along the appropriate formed cam curve.

15. The wheel with mobile arms according to the patent claims 1 to 14 **characterized in that** there is a switching mechanism installed in the cam plate at the junction of curves.

16. The wheel with mobile arms according to the patent claims 1 to 15 **characterized in that** the capability is provided to move the switching mechanism from one position to another.

17. The wheel with mobile arms according to the patent claims 1 to 16 **characterized in that** the movement of switching mechanism from one position into another is causing the peg to transfer from one motion curve to the other.
